# FASCICULE DE BREVET EUROPEEN

(11) **EP 4 310 350 B1**
(45) Date de publication et mention de la délivrance du brevet: **17.09.2025**
(21) Numéro de dépôt: 23184515.7
(22) Date de dépôt: 10.07.2023
(51) Int. Cl.: F16C 17/02, F16C 33/04, F16C 33/10, F16C 33/66, F16C 35/02, F16C 35/067

(54) **SUPPORT DE PALIER D ARBRES À CAMES**
LAGERUNG FÜR NOCKENWELLEN
CAMSHAFT BEARING SUPPORT

(30) Priorité: 19.07.2022 FR 2207382
(43) Date de publication de la demande: 24.01.2024
(73) Titulaire: New H Powertrain Holding, S.l.u., 47008 Valladolid (ES)
(72) Inventeur: BARTALINI, MICHEL, 78084 GUYANCOURT (FR); BEAUCAMP, PASCAL, 78804 GUYANCOURT (FR); BEISBARDT, OLIVIER, 78084 GUYANCOURT (FR); KUMAR, ANTHONY, 78084 GUYANCOURT (FR); PRUVOT, VINCENT, 78084 GUYANCOURT (FR)
(74) Mandataire: Elzaburu S.L.P.

(56) Documents cités:
- JP-A- 2003 148 122
- JP-A- H10 317 933
- JP-B2- 5 063 405

## Description

La présente invention se rapporte au domaine de l'automobile et concerne plus précisément un support de palier d'arbres à cames pour un moteur à combustion interne.

Dans un moteur à combustion interne équipé d'un arbre à cames d'admission et d'un arbre à cames d'échappement, les arbres à cames sont montés en rotation entre des paliers cylindriques dont une moitié de chacun des paliers est formée dans une culasse du moteur à combustion interne et l'autre moitié est généralement formée par des chapeaux de paliers vissés sur la culasse. Ces paliers nécessitent d'être lubrifiés par un fluide de lubrification, souvent de l'huile.

La lubrification des paliers est assurée généralement par un circuit de lubrification agencé dans la culasse du moteur à combustion interne ou dans les arbres à cames.

Dans le premier cas, les sorties du circuit de lubrification sont des orifices débouchant sur une surface de contact de chaque palier avec l'arbres à came qu'il maintient. Dans le deuxième cas, les sorties du circuit de lubrification sont des orifices débouchant sur une surface de contact de l'arbre à cames avec le palier qui maintient l'arbre à cames. Cette dernière solution présente l'inconvénient de fragiliser l'arbre à cames qui doit être creusé pour réaliser le circuit de lubrification.

Dans le premier cas, le circuit de lubrification présente un encombrement, de par chaque branche d'alimentation d'un palier à partir de la culasse, qui contraint fortement l'agencement des équipements au sein d'un compartiment moteur de véhicule, qui intégrerait le moteur à combustion interne avec un tel circuit de lubrification.

Or, les culasses d'aujourd'hui sont de taille de plus en plus restreinte et comportent de plus en plus de fonctions, si bien que la place manque pour creuser les branches d'alimentation en fluide lubrifiant des paliers de l'arbre à cames.

La présente invention remédie au moins en partie aux inconvénients de l'art antérieur en fournissant un support de paliers d'arbres à cames, et une partie haute de moteur à combustion interne, qui permettent de lubrifier des paliers sans nécessiter d'arbre à cames creux et sans nécessiter autant de branches d'alimentation que le nombre de ces paliers.

A cette fin, l'invention propose un support de paliers d'arbres à cames d'un moteur à combustion interne, comportant des demi-paliers se complétant pour former au moins deux paliers destinés à recevoir chacun un desdits arbres à cames, le support étant formé d'au moins un premier bloc de matière et d'un deuxième bloc de matière, chaque bloc de matière comportant un demi-palier des deux paliers, le support étant caractérisé en ce qu'il comporte un passage destiné à être parcouru par un fluide de lubrification des paliers, le passage reliant les deux paliers étant au moins agencé sur une surface de contact entre le premier bloc de matière et le deuxième bloc de matière.

Grâce à l'invention, le fluide de lubrification alimente un premier palier du support depuis un deuxième palier du support, en transitant par le passage agencé dans le support entre le premier et le deuxième palier, sans qu'une branche d'alimentation spécifique vienne alimenter le premier palier depuis la culasse du moteur à combustion interne. De plus, l'invention ne nécessite pas de percer les arbres à cames.

Le passage est une rainure ou une gorge que l'un et/ou l'autre des blocs comprend.

Le support est éventuellement réalisé en plus de deux blocs et comporte éventuellement plus de deux paliers. Ces paliers maintiennent par exemple chacun des arbres à cames distincts du moteur à combustion interne.

Préférentiellement, au moins un des paliers du support selon l'invention est un palier lisse. Avantageusement, les deux paliers sont lisses.

Selon une caractéristique avantageuse du support de paliers d'arbres à cames selon l'invention, la surface de contact est interrompue par un des deux paliers, voire par les deux paliers. Ainsi, la fermeture des paliers du support, par la fixation du premier bloc de matière sur le deuxième bloc de matière du support, ferme le passage destiné à recevoir le fluide de lubrification.

De préférence, la totalité du passage est agencée sur la surface de contact entre deux blocs. Cela facilite l'assemblage du support et le montage d'un circuit de lubrification alimentant les paliers du support.

Selon une caractéristique avantageuse du support selon l'invention, au moins un des demi-paliers comporte une gorge, par exemple de section semi-circulaire, faisant partie du passage. Ainsi, le passage facilite la formation d'un film de lubrifiant tout autour de l'arbre à cames dans le palier du support. Alternativement, le demi-palier est dépourvu de gorge de lubrification.

Selon l'invention, le support est formé de deux blocs de matière, le deuxième bloc de matière étant destiné à être rapporté sur une culasse du moteur à combustion interne, le premier bloc de matière formant un chapeau de paliers.

Le passage du support selon l'invention est agencé par exemple dans le chapeau de paliers.

Selon une caractéristique avantageuse du support selon l'invention, le passage débute, sur la surface de contact, par une chambre destinée à accumuler du fluide de lubrification en entrée du passage. Cette caractéristique améliore la distribution du fluide de lubrification dans les paliers du support.

Dans un mode de réalisation, au moins un trou de passage de vis est ménagé au travers de la surface de contact. Ce trou de passage de vis est destiné à recevoir une vis de fixation des deux blocs du support selon l'invention. Dans ce mode de réalisation, le fluide de lubrification passe de part et d'autre de la vis dans le passage du support. Selon une autre caractéristique avantageuse du support selon l'invention, le passage est configuré pour être raccordé avec un conduit d'alimentation en fluide de lubrification d'au moins un déphaseur d'arbre à cames. Cette caractéristique diminue l'encombrement du circuit d'alimentation du ou des déphaseurs. Le passage peut alimenter deux déphaseurs quand la culasse comprend deux arbre à cames.

L'invention concerne aussi une partie haute d'un moteur à combustion interne, autrement appelée haut moteur, comportant une culasse, deux arbres à cames montés dans la culasse par l'intermédiaire de paliers de la partie haute du moteur, cette dernière étant caractérisée en ce qu'elle comporte au moins un support de paliers selon l'invention.

Dans un mode de réalisation, la partie haute du moteur à combustion interne selon l'invention comporte un premier circuit de lubrification des paliers alimentant ledit passage et un deuxième circuit de lubrification alimentant des paliers classiques de la partie haute autres que ceux du support, le premier circuit étant distinct du deuxième circuit au sein de la partie du haute du moteur. Cela ajoute de la flexibilité à la réalisation de la fonction de lubrification dans le moteur à combustion interne.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
[fig 1] est une vue en perspective d'un support de paliers d'arbres à cames selon l'invention, dans un mode de réalisation de l'invention,
[fig 2] est une vue éclatée du support de paliers de la figure 1, et
[fig 3] représente des éléments d'une partie haute d'un moteur à combustion interne comportant le support de paliers des figures 1 et 2.

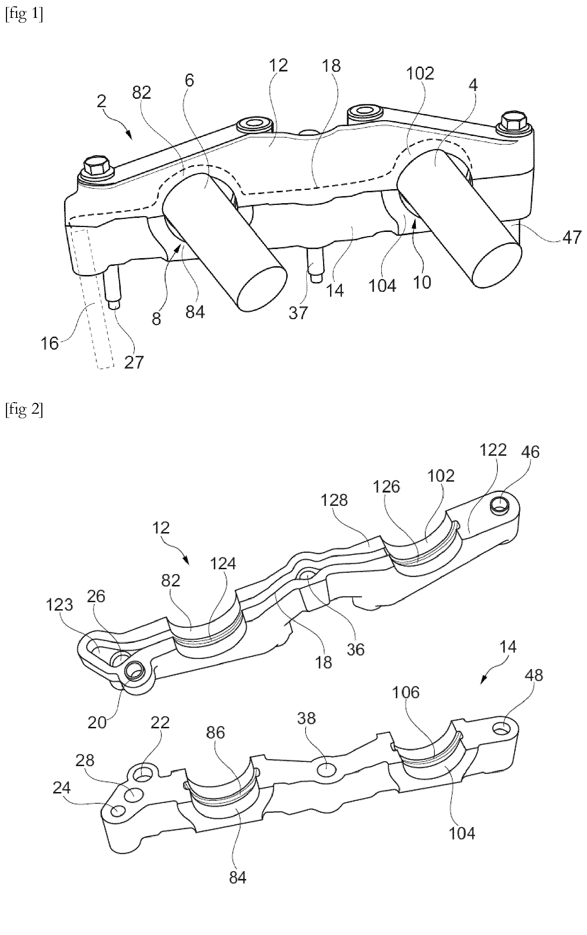

Selon un mode de réalisation de l'invention représenté sur les figures 1 et 2, un support 2 de paliers d'arbres à cames d'un moteur à combustion interne est formé d'un premier bloc 12 et d'un deuxième bloc 14 de matière, par exemple en alliage d'aluminium. Le support 2 loge deux paliers 8 et 10, qui sont des paliers lisses dans ce mode de réalisation, aptes à recevoir respectivement un premier arbre à cames 6 et un deuxième arbre à cames 4. Le premier arbre à cames 4 est par exemple un arbre à cames d'admission, et le deuxième arbre à cames 6 est par exemple un arbre à cames d'échappement.

Le palier 8 est formé d'un demi-palier 82 du premier bloc 12 de matière et d'un demi-palier 84 du deuxième bloc 14 de matière. De même, le palier 10 est formé d'un demi-palier 102 du premier bloc 12 de matière et d'un demi-palier 104 du deuxième bloc 14 de matière.

Bien sûr en variante, le support 2 est réalisé de plus de deux blocs de matière, chaque bloc de matière comportant de préférence au moins un demi-palier 82, 84, 102 ou 104.

Selon l'invention, le support 2 de palier comporte un passage 18 destiné à être parcouru par un fluide de lubrification des paliers, par exemple de l'huile, agencé sur la surface de contact 128 du premier bloc 12 de matière qui vient en appui sur le deuxième bloc 14 de matière, sous forme d'une rainure creusée sur cette surface.

Une surface 122 longiligne est au moins partiellement la surface de contact du premier bloc 12 de matière avec le deuxième bloc 14 de matière, le contact de cette surface 122 longiligne avec le deuxième bloc de matière 14 étant interrompu au niveau des demi-paliers 82 et 102. Notamment, la zone de part et d'autre du passage 18 et entre les paliers 8 et 10 est une surface de contact 128 entre les deux blocs 12 et 14 de matière. On comprend ici que la surface de contact 128 comprend une rainure ou une gorge qui forme le passage 18.

Ce passage 18 est représenté en pointillés figure 1 et est alimenté par un premier circuit 16 de lubrification des paliers 8 et 10.

Plus précisément, le passage 18 débute par une chambre 123 d'accumulation de fluide de lubrification en provenance du premier circuit 16 de lubrification, cette chambre 123 permettant d'assurer un remplissage optimal du passage 18 en fluide de lubrification. Le passage 18 s'étend depuis la chambre 123 réalisée dans la surface 122 longiligne jusqu'à une gorge semi-circulaire 124 du demi-palier 82, en faisant partie du passage 18.

Le passage 18 s'étend ensuite depuis la gorge semi-circulaire 124 sur la surface de contact 128 jusqu'à une gorge semi-circulaire 126 du demi-palier 102, faisant également partie du passage 18.

Ainsi, le passage 18 relie les deux paliers 8 et 10, le long de la jonction entre le premier bloc 12 et le deuxième bloc 14, en suivant la surface longiligne 122. Le passage 18 s'étend, dans ce mode de réalisation de l'invention, depuis la chambre 123 d'accumulation de fluide de lubrification, jusqu'à une extrémité de la gorge semi-circulaire 126, cette extrémité étant distale à la chambre 123 d'accumulation.

Le passage 18 est préférentiellement usiné dans le premier bloc 12 de matière, formant un chapeau de paliers, le deuxième bloc 14 étant rapporté sur la culasse, par exemple par vissage.

Des trous 26, 36, 46 de passage de vis sont également usinés dans le premier bloc 12 de matière, au travers de la surface de contact 128, et sont disposés en regard de trous 28, 38 et 48 de passage de vis correspondants du deuxième bloc 14 de matière.

Ces trous permettent de visser le premier bloc 12 sur le deuxième bloc 14 et de refermer ainsi les paliers 8 et 10, ainsi que le passage 18. Les vis 27, 37, 47 insérées respectivement dans ces trous 26, 36, 46 de passage de vis permettent également de rapporter par vissage le deuxième bloc 14 sur la culasse du moteur interne à combustion.

En variante de réalisation, seulement deux vis sont utilisées pour fixer ensemble les blocs 12 et 14, ces deux vis étant par exemple situées aux extrémités du passage 18, éventuellement en dehors du passage 18. Dans une autre variante de réalisation, plus de trois vis sont utilisées pour cette fixation.

Un pion d'indexage 20 permet de bien positionner le premier bloc 12 de matière sur le deuxième bloc 14 de matière avant leur fixation l'un à l'autre. Pour cela, le pion d'indexage 20 est préalablement inséré dans un orifice 22 correspondant du deuxième bloc de matière 14.

L'entrée du fluide de lubrification dans la chambre 123 s'effectue par un orifice 24 du deuxième bloc de matière 14, en regard de la chambre 123. Le fluide de lubrification parcourt ensuite le passage 18 en contournant de part et d'autre les vis insérées dans les trous de passage de vis, et en parcourant le pourtour interne des paliers 8 et 10, grâce notamment aux gorges semi-circulaires 124 et 126, mais aussi grâce à des gorges semi-circulaires 86 et 106 agencées sur la surface des demi-paliers 84 et 104 du deuxième bloc 14 de matière, qui est en contact avec les arbres à cames 4 et 6.

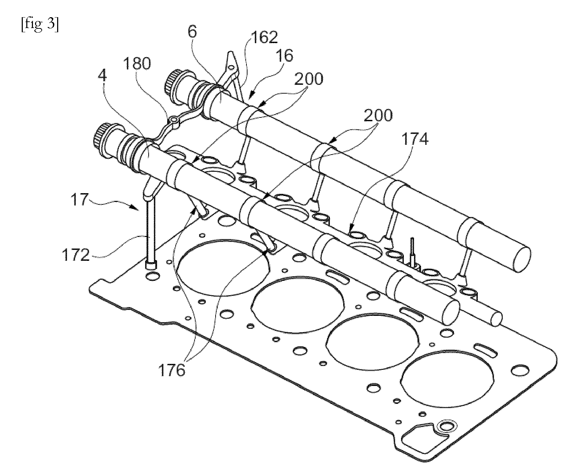

La figure 3 représente les arbres à cames 4 et 6 montés mobiles dans la partie haute du moteur à combustion interne. Plus précisément, les arbres à cames 4 et 6 sont montés dans deux types de paliers :
- les paliers 8 et 10 du support 2 selon l'invention et décrits précédemment, non représentés sur la figure 3, seul le fluide 180 de lubrification circulant dans le passage 18 et autour des arbres 4, 6 dans les paliers 8, 10 étant représenté sur cette figure 3, et
- des paliers classiques 200 de la partie haute, qui sont également des paliers lisses et sont représentés uniquement par les films de fluide de lubrification qu'ils créent autour des arbres à cames 4, 6. Ces paliers classiques 200 sont alimentés en fluide de lubrification par un circuit d'alimentation visible sur la figure 3.

Les paliers 8 et 10 selon l'invention sont alimentés en fluide de lubrification par le premier circuit 16 de lubrification, qui comporte une branche 162 d'où monte le fluide de lubrification provenant d'un réservoir de fluide de lubrification du moteur à combustion interne, ainsi que le passage 18 du support 2. Le premier circuit 16 est également en communication avec un conduit d'alimentation de déphaseurs des arbres à cames 4, 6, non représenté.

Les paliers classiques 200 sont quant à eux alimentés en fluide de lubrification par un deuxième circuit 17 de lubrification, distinct au sein de la culasse du premier circuit 16 de lubrification.

Le deuxième circuit 17 de lubrification comporte une branche 172 d'où monte le fluide de lubrification provenant du réservoir de fluide de lubrification, une portion centrale 174 qui longe les arbres à cames 4, 6 et d'où part une branche d'alimentation 176 en fluide de lubrification pour chaque palier classique 200. Les branches d'alimentation 176 débouchent sur un orifice agencé sur la surface de contact du palier classique 200 avec l'arbre à cames 4 ou 6.

Le fait d'utiliser un support 2 selon l'invention au bout des arbres à cames 4, 6 permet donc de ne pas nécessiter une branche d'alimentation 176 qui relierait la portion centrale 174 au palier 10 selon l'invention. On réduit ainsi le nombre de composant au sein de cette culasse, notamment en extrémité de cette partie haute du moteur. Ce gain d'espace est donc utilisable pour insérer un équipement à proximité du palier selon l'invention 10, ce qui est avantageux dans un environnement aussi contraint que celui d'un compartiment moteur.

Bien sûr, l'invention n'est pas limitée aux exemples qui viennent d'être décrits et de nombreux aménagements peuvent être apportés à ces exemples sans sortir du cadre de l'invention.

## Revendications

1. Support (2) de paliers d'arbres à cames (4, 6) d'un moteur à combustion interne, comportant des demi-paliers (82, 84, 102, 104) se complétant pour former au moins deux paliers (8, 10) destinés à recevoir chacun un desdits arbres à cames (4, 6), le support (2) étant formé d'un premier bloc de matière (12) et d'un deuxième bloc de matière (14), chaque bloc de matière (12, 14) comportant un demi-palier (82, 84, 102, 104) des deux paliers (8, 10), le support (2) comportant un passage (18) destiné à être parcouru par un fluide (180) de lubrification des paliers (8, 10), le passage (18) reliant les deux paliers (8, 10) étant au moins agencé sur une surface de contact (128) entre le premier bloc de matière (12) et le deuxième bloc de matière (14), **caractérisé en ce que** le deuxième bloc (14) de matière est destiné à être rapporté sur une culasse du moteur à combustion interne, et **en ce que** le premier bloc (12) forme un chapeau de paliers.

2. Support (2) de paliers d'arbres à cames (4, 6) selon la revendication 1, dans lequel la surface de contact (128) est interrompue par un des deux paliers (8, 10).

3. Support (2) de paliers d'arbres à cames (4, 6) selon la revendication 1 ou 2, dans lequel au moins un des demi-paliers (82, 84) comporte une gorge (124, 126) faisant partie du passage (18).

4. Support (2) de paliers d'arbres à cames (4, 6) selon l'une quelconque des revendications précédentes, dans lequel au moins un des paliers (8, 10) est un palier lisse.

5. Support (2) de paliers d'arbres à cames (4, 6) selon l'une quelconque des revendications précédentes, dans lequel le passage (18) est agencé dans le chapeau de paliers.

6. Support (2) de paliers d'arbres à cames (4, 6) selon l'une quelconque des revendications précédentes, dans lequel le passage (18) débute, sur la surface de contact (128), par une chambre (123) destinée à accumuler du fluide (180) de lubrification en entrée du passage (18).

7. Support (2) de paliers d'arbres à cames (4, 6) selon l'une quelconque des revendications précédentes, dans lequel au moins un trou (26, 36, 46) de passage de vis est ménagé au travers de la surface de contact (128).

8. Support (2) de paliers d'arbres à cames (4, 6) selon l'une quelconque des revendications précédentes, dans lequel le passage (18) est configuré pour être raccordé avec un conduit d'alimentation d'au moins un déphaseur d'arbre à cames (4, 6).

9. Partie haute d'un moteur à combustion interne, comportant une culasse, au moins deux arbres à cames (4, 6) montés dans la culasse par l'intermédiaire de paliers (8, 10, 200) de la partie haute du moteur, **caractérisée en ce qu'**elle comporte au moins un support (2) de paliers selon l'une quelconque des revendications précédentes.

10. Partie haute d'un moteur à combustion interne selon la revendication précédente, comportant un premier circuit (16) de lubrification des paliers alimentant ledit passage (18) et un deuxième circuit (17) de lubrification alimentant des paliers classiques (200) de la partie haute autres que ceux du support (2), le premier circuit (16) étant distinct du deuxième circuit (17) au sein de la partie du haute du moteur.

## Patentansprüche

1. Lagerträger (2) für Nockenwellen (4, 6) eines Verbrennungsmotors, aufweisend Halblager (82, 84, 102, 104), die zusammen jeweils mindestens zwei Lager (8, 10) bilden, welche jeweils eine der genannten Nockenwellen (4, 6) aufnehmen sollen, wobei der Lagerträger (2) aus einem ersten Werkstoffblock (12) und einem zweiten Werkstoffblock (14) gebildet ist, wobei jeder Werkstoffblock (12, 14) ein Halblager (82, 84, 102, 104) der beiden Lager (8, 10) aufweist, wobei der Lagerträger (2) einen Durchgang (18) umfasst, der von einem Schmiermittel (180) zur Schmierung der Lager (8, 10) durchströmt werden soll, wobei der die beiden Lager (8, 10) verbindende Durchgang (18) zumindest an einer Kontaktfläche (128) zwischen dem ersten Werkstoffblock (12) und dem zweiten Werkstoffblock (14) angeordnet ist, **dadurch gekennzeichnet, dass** der zweite Werkstoffblock (14) dazu bestimmt ist, an einem Zylinderkopf des Verbrennungsmotors angebracht zu werden, und dass der erste Werkstoffblock (12) ein Lagerdeckel bildet.

2. Lagerträger (2) für Nockenwellen (4, 6) nach Anspruch 1, wobei die Kontaktfläche (128) durch eines der beiden Lager (8, 10) unterbrochen ist.

3. Lagerträger (2) für Nockenwellen (4, 6) nach Anspruch 1 oder 2, wobei mindestens eines der Halblager (82, 84) eine Nut (124, 126) aufweist, die einen Teil des Durchgangs (18) bildet.

4. Lagerträger (2) für Nockenwellen (4, 6) nach einem der vorhergehenden Ansprüche, wobei mindestens eines der Lager (8, 10) ein Gleitlager ist.

5. Lagerträger (2) für Nockenwellen (4, 6) nach einem der vorhergehenden Ansprüche, wobei der Durchgang (18) im Lagerdeckel angeordnet ist.

6. Lagerträger (2) für Nockenwellen (4, 6) nach einem der vorhergehenden Ansprüche, bei dem der Durchgang (18) an der Kontaktfläche (128) durch eine Kammer (123) zum Sammeln von Schmiermittel (180) am Einlass des Durchgangs (18) beginnt.

7. Lagerträger (2) für Nockenwellen (4, 6) nach einem der vorhergehenden Ansprüche, wobei mindestens ein Schraubendurchgangsloch (26, 36, 46) durch die Kontaktfläche (128) hindurch ausgebildet ist.

8. Lagerträger (2) für Nockenwellen (4, 6) nach einem der vorhergehenden Ansprüche, wobei der Durchgang (18) so konfiguriert ist, dass er mit einer Zuführleitung für mindestens einen Nockenwellenversteller (4, 6) verbunden werden kann.

9. Oberteil eines Verbrennungsmotors, mit einem Zylinderkopf, mindestens zwei Nockenwellen (4, 6), die im Zylinderkopf über Lager (8, 10, 200) des Oberteils des Verbrennungsmotors montiert sind, **dadurch gekennzeichnet, dass** er mindestens einen Lagerträger (2) nach einem der vorhergehenden Ansprüche aufweist.

10. Oberteil eines Verbrennungsmotors nach dem vorhergehenden Anspruch, mit einem ersten Lagerschmierkreis (16), der den Durchgang (18) speist, und einem zweiten Schmierkreis (17), der herkömmliche Lager (200) des Oberteils speist, die von denen des Trägers (2) verschieden sind, wobei der erste Kreis (16) von dem zweiten Kreis (17) innerhalb des oberen Teils des Motors verschieden ist.

## Claims

1. A support (2) for camshaft bearings (4, 6) of an internal combustion engine, comprising half-bearings (82, 84, 102, 104) complementing each other to form at least two bearings (8, 10) each intended to receive one of said camshafts (4, 6), wherein the support (2) is formed from a first block of material (12) and a second block of material (14), each block of material (12, 14) comprising a half-bearing (82, 84, 102, 104) of the two bearings (8, 10), wherein the support (2) further comprises a passage (18) intended to be traversed by a fluid (180) for lubricating the bearings (8, 10), the passage (18) connecting the two bearings (8, 10) being at least arranged on a contact surface (128) between the first block of material (12) and the second block of material (14), **characterized in that** the second block (14) of material is intended to be attached to a cylinder head of the internal combustion engine, and **in that** the first block (12) forms a bearing cap.

2. The support (2) for camshafts (4, 6) according to claim 1, wherein the contact surface (128) is interrupted by one of the two bearings (8, 10).

3. The support (2) for camshafts (4, 6) according to claim 1 or 2, wherein at least one of the half-bearings (82, 84) has a groove (124, 126) forming part of the passage (18).

4. The support (2) for camshafts (4, 6) according to any of the preceding claims, wherein at least one of the bearings (8, 10) is a plain bearing.

5. The support (2) for camshafts (4, 6) according to any of the preceding claims, wherein the passage (18) is arranged in the bearing cap.

6. The support (2) for camshafts (4, 6) according to any of the preceding claims, wherein the passage (18) begins, on the contact surface (128), with a chamber (123) intended to accumulate lubricating fluid (180) at the inlet of the passage (18).

7. The support (2) for camshafts (4, 6) according to any of the preceding claims, wherein at least one screw passage hole (26, 36, 46) is provided through the contact surface (128).

8. The support (2) for camshafts (4, 6) according to any of the preceding claims, wherein the passage (18) is configured to be connected to a supply duct of at least one camshaft phase shifter (4, 6).

9. An upper part of an internal combustion engine, comprising a cylinder head, at least two camshafts (4, 6) mounted in the cylinder head via bearings (8, 10, 200) of the upper part of the engine, **characterized in that** it comprises at least one bearing support (2) according to any of the preceding claims.

10. The upper part of an internal combustion engine according to the preceding claim, comprising a first circuit (16) for lubricating the bearings that supply said passage (18) and a second circuit (17) for lubricating conventional bearings (200) of the upper part other than those of the support (2), wherein the first circuit (16) is distinct from the second circuit (17) within the upper part of the engine.
